# FASCICULE DE BREVET EUROPEEN

(11) **EP 1 715 314 B1**
(45) Date de publication et mention de la délivrance du brevet: **28.09.2011**
(21) Numéro de dépôt: 06290662.3
(22) Date de dépôt: 21.04.2006
(51) Int. Cl.: G01J 5/06

(54) **Appareil de détection de rayonnement infrarouge, autodirecteur équipé d'un tel appareil et projectile autoguidé équipé d'un tel autodirecteur**
Vorrichtung zur Detektion von Infrarotstrahlung, Lenksystem ausgestattet mit dieser Vorrichtung und selbstgesteuertes Geschoss ausgestattet mit diesem Lenksystem.
Apparatus for detecting infrared radiation, guidance system equipped with said apparatus, and self-guided projectile equipped with said guidance system

(30) Priorité: 22.04.2005 FR 0504097
(43) Date de publication de la demande: 25.10.2006
(73) Titulaire: SAGEM Défense Sécurité, 75015 Paris (FR)
(72) Inventeur: Coursaget, Francois, 78150 Le Chesnay (FR); Rosello, Jérôme, 75003 Paris (FR)
(74) Mandataire: Bérogin, Francis

(56) Documents cités:
- EP-A- 0 518 515
- US-A- 4 954 708
- US-A- 5 198 671
- US-A- 5 598 966
- US-A- 6 070 414

## Description

L'invention a trait aux appareils de détection de rayonnement électromagnétique, destinés notamment à équiper les autodirecteurs de projectiles autoguidés (missiles, roquettes, etc.).

Les appareils de ce type sont généralement équipés d'un capteur de rayonnement électromagnétique (couramment dénommé « FPA », acronyme de l'anglais « Focal Plane Array ») qui ne peut fonctionner que sous vide et à basse température.

Des appareils de ce type sont divulgués dans les documents US 5 198 671, EP 0 518 515, US 6 070 414, US 4 954 708 et US 5 598 966.

Le refroidissement du capteur, monté dans un boîtier muni d'une fenêtre transparente au rayonnement électromagnétique pour la transmission de celui-ci au capteur, est couramment assuré par un échangeur de chaleur logé dans un doigt froid fixé au boîtier et dont une paroi forme support pour le capteur. Le rayonnement détecté est généralement infrarouge. Dans ce cas, le matériau utilisé pour la fenêtre de transmission est choisi parmi le germanium, le saphir ou la silice.

Le cahier des charges auquel doit répondre un tel appareil est extrêmement sévère. Premièrement, son boîtier doit être parfaitement étanche pour assurer le maintien du vide dans l'enceinte. Cette étanchéité doit être assurée non seulement à la jonction des différentes pièces constitutives du boîtier, mais également, d'une part à la jonction de ces pièces avec la fenêtre de transmission, et d'autre part au niveau du passage de connecteurs électriques traversant le boîtier et reliant le capteur à une carte électronique externe de traitement des données transmises par celui-ci (également appelée « carte de proximité »). Deuxièmement, le boîtier doit être structurellement rigide afin de minimiser les erreurs de mesure. Troisièmement, le matériau dans lequel est réalisé le boîtier doit présenter un coefficient de dilatation thermique relativement faible au regard des importants écarts de température auquel est soumis l'appareil (de - 40°C à +80°C)

Il y a plusieurs décennies, le boîtier de l'appareil était réalisé en verre soufflé. Les connexions du capteur étaient simplement piquées dans le verre encore mou, et la fenêtre de transmission simplement scellée sur le boîtier.

Compte tenu de l'accroissement de la taille des appareils, dû à la multiplication des connexions reliant le capteur à la carte de proximité, l'utilisation du verre s'est vite révélée inadaptée et on lui a préféré des alliages métalliques, le plus couramment employé à l'heure actuelle étant un alliage fer/nickel/cobalt, disponible dans le commerce sous les dénominations commerciales « Kovar », ou « Dilver ».

Le Kovar donne entière satisfaction au regard du cahier des charges rappelé ci-dessus. La technique d'enverrage (c'est-à-dire de scellement du verre) des connexions sur Kovar est aujourd'hui relativement bien maîtrisée. D'autres techniques de passage étanche des connexions ont également été proposées (Cf. par exemple la demande de brevet français FR 2 717 981).

Néanmoins, les inventeurs ont souhaité proposer une solution alternative permettant d'accroître encore les performances de l'appareil.

A cet effet, ils proposent, suivant un premier aspect, un appareil de détection d'ondes électromagnétiques, selon les caractéristiques de la revendication 1.

Suivant un mode de réalisation, les pièces du boîtier sont :
- un corps principal muni de passages étanches pour des connecteurs de liaison du capteur à une carte électronique externe,
- une bride de fixation de l'appareil à un support externe, et
- un capot muni d'une ouverture située au droit du capteur, et sur laquelle est montée une fenêtre transparente au rayonnement électromagnétique auquel le capteur est sensible.

Il en résulte un certain nombre d'avantages, parmi lesquels on peut citer :
- un meilleur positionnement du doigt froid par rapport au boîtier, au bénéfice du parfait positionnement du FPA et donc des performances optroniques,
- une simplification de la fabrication de l'appareil, l'usinage du titane étant mieux maîtrisé notamment que celui du Kovar, et l'assemblage du boîtier et du doigt froid pouvant se faire par simple soudure laser,
- une réduction de la masse de 30% environ par rapport à un appareil en Kovar,
- une meilleure adaptation de l'appareil au fonctionnement en environnement non étanche, le titane étant en effet relativement insensible à la corrosion, au regard notamment du Kovar.

Suivant un mode de réalisation, le doigt froid comprend une embase, à partir de laquelle s'étend en saillie le récipient Dewar, et par laquelle le doigt froid est fixé au boîtier.

De préférence, la fixation du doigt froid au boîtier est réalisée par soudure laser.

Suivant un mode de réalisation, les passages étanches dans le corps principal sont garnis de verre scellé au corps principal.

Quant à la fenêtre, elle est de préférence réalisée en germanium, mais elle peut également être réalisée en saphir ou en silice. En outre, elle est de préférence fixée à l'ouverture du capot par brasure, par exemple en mettant en oeuvre un alliage plomb/indium.

S'agissant du matériau dans lequel sont réalisés le boîtier et le doigt froid, il s'agit par exemple d'un alliage de titane TA6V, ou encore d'un titane TA40.

Les inventeurs proposent également, suivant un deuxième aspect, un autodirecteur équipé d'un tel appareil, ainsi qu'un projectile autoguidé équipé d'un tel un autodirecteur.

D'autres objets et avantages de l'invention apparaîtront à la lumière de la description faite ci-après en référence aux dessins annexés dans lesquels :
- la figure 1 est une vue schématique en coupe partielle d'un projectile muni d'un autodirecteur équipé d'un appareil de détection de rayonnement électromagnétique ;
- la figure 2 est une vue en perspective montrant un appareil de détection de rayonnement électromagnétique ;
- la figure 3 est une vue en plan de dessus de l'appareil de la figure 2 ;
- la figure 4 est une vue d'élévation en coupe de l'appareil des figures 2 et 3, suivant le plan de coupe IV-IV de la figure 3 ;
- la figure 5 est une vue en plan de dessous de l'appareil des figures précédentes ;
- la figure 6 est une vue en perspective partielle montrant l'appareil des figures précédentes dont une partie supérieure a été omise ;
- la figure 7 est une vue similaire à la figure 6, et où des pièces supplémentaires de l'appareil ont été omises ;

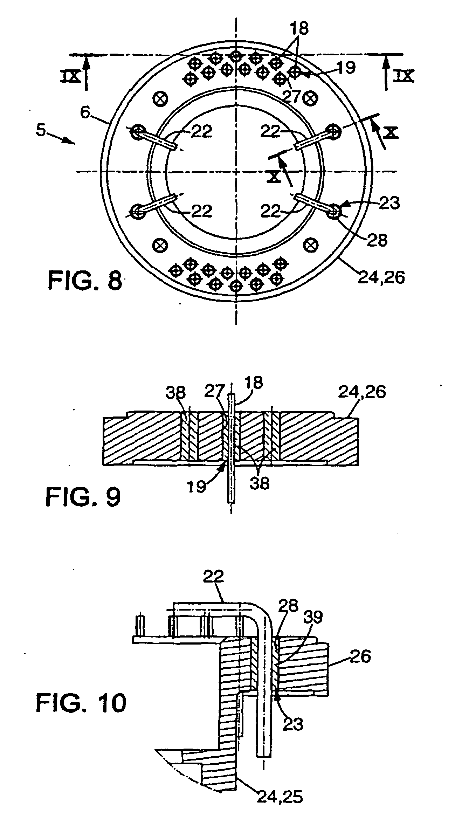

- la figure 8 est une vue en plan de dessus de l'appareil tel que représenté sur la figure 7 ;
- la figure 9 est une vue d'élévation en coupe de l'appareil de la figure 8, suivant le plan de coupe IX-IX ; et
- la figure 10 est une vue d'élévation en coupe de l'appareil de la figure 8, suivant le plan de coupe X-X.

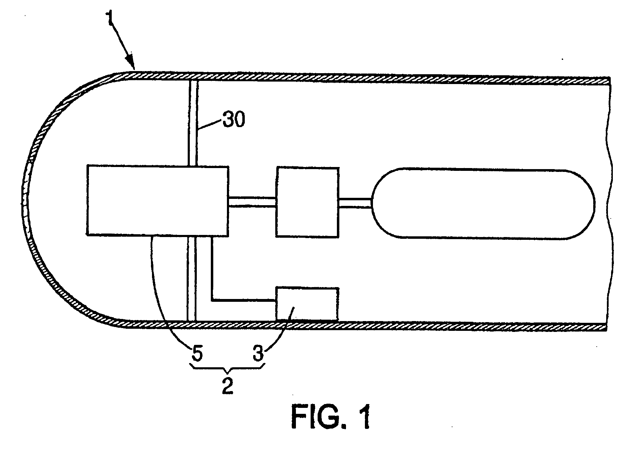

Sur la figure 1 est représenté un projectile 1 (en l'occurrence un missile) autoguidé, et équipé à cet effet d'un autodirecteur 2 optique comprenant une unité de traitement de données 3 en provenance d'un capteur infrarouge 4, ainsi qu'un appareil 5 de détection de rayonnement électromagnétique (en l'occurrence de rayonnement infrarouge) dans lequel est monté ce capteur 4.

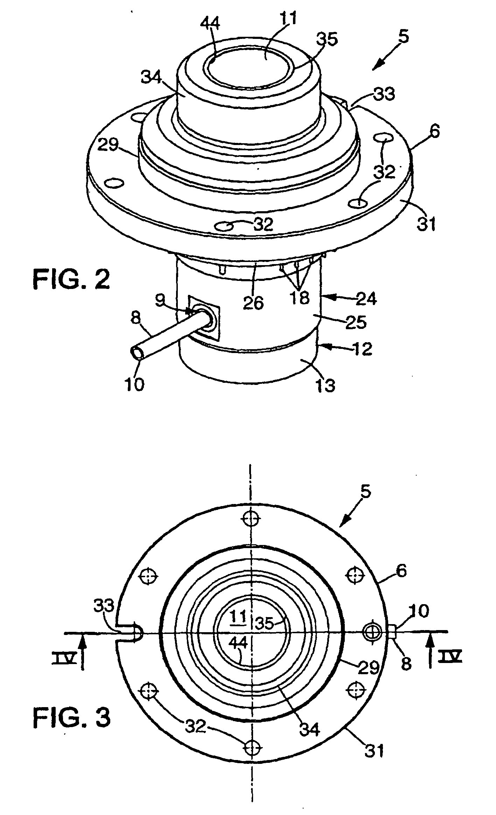

L'appareil 5, représenté notamment sur les figure 2 à 5, comprend un boîtier 6 creux définissant une enceinte 7 dans laquelle règne un vide partiel (10⁻⁶ mbar environ). Ce vide est réalisé par pompage via un queusot 8 fixé à demeure sur le boîtier 6 au travers d'un trou 9 pratiqué dans celui-ci, et dont une extrémité externe 10 est écrasée et scellée à la fin du pompage.

Comme cela est visible sur la figure 2, le boîtier 6 présente une fenêtre 11 réalisé dans un matériau transmettant le rayonnement électromagnétique auquel est sensible le capteur (pour l'infrarouge, on choisira de préférence du germanium, du saphir ou de la silice).

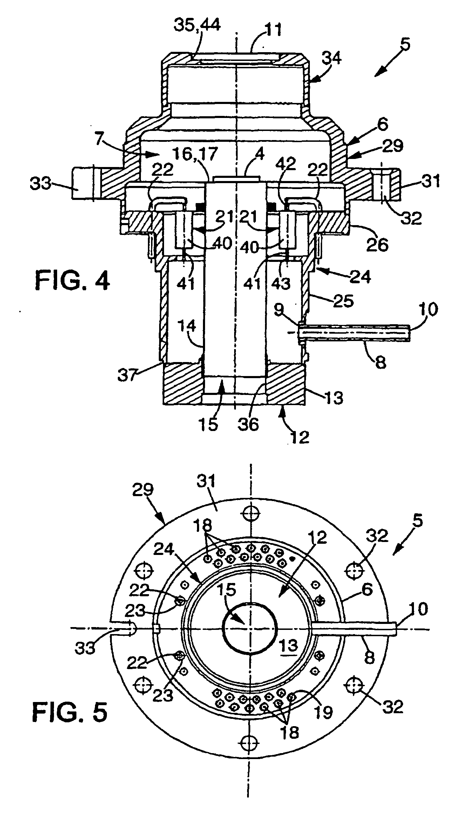

Comme cela est visible sur la figure 4, l'appareil comprend en outre un doigt froid 12 comprenant une embase 13 fixée de manière étanche au boîtier 6, ainsi qu'un récipient Dewar 14 sous la forme d'un tube creux qui s'étend axialement (c'est-à-dire perpendiculairement à la fenêtre) dans l'enceinte à partir de l'embase 13. Le récipient Dewar 14 débouche, à une extrémité amont, par une ouverture 15 et est fermé, à une extrémité aval, par une paroi terminale 16 présentant une face externe 17, située au droit de la fenêtre 11 et tournée vers celle-ci.

Le capteur infrarouge 4 est monté sur la paroi terminale 16 du récipient Dewar 14, du côté de sa face externe 17, de manière à pouvoir être frappé par le rayonnement infrarouge traversant la fenêtre 11. Le capteur 4 est relié électriquement à une carte de circuit intégré (dite carte de proximité, non représentée), montée à l'extérieur du boîtier 6, par l'intermédiaire de connecteurs 18 traversant le boîtier 6 par des passages 19 étanches garnis de verre.

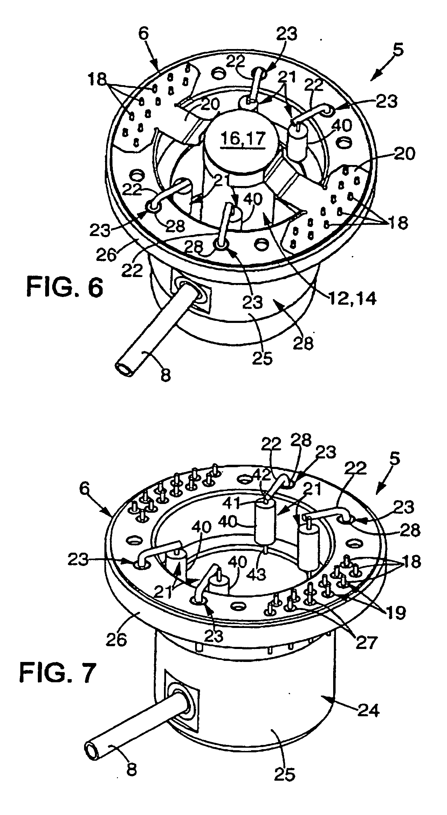

Comme cela est visible sur la figure 6, les connecteurs 18 sont répartis en deux groupes diamétralement opposés ; chaque groupe de connecteurs est relié au capteur 4 par une ligne souple 20 sur laquelle des pistes électriques (non visibles) sont sérigraphiées pour la liaison du capteur 4 à chaque connecteur 18.

Le capteur 4 ne peut fonctionner qu'à des températures extrêmement basses, de l'ordre de 77 à 100°K. A cet effet, l'appareil 5 comporte un échangeur de chaleur tubulaire (non représenté) logé dans le récipient Dewar 14, et assurant le refroidissement du capteur 4 par effet Joule Thomson.

Ce phénomène est bien connu de l'homme du métier ; il est suffisamment décrit dans l'art antérieur et il n'apparaît donc pas nécessaire de le décrire ici plus en détail. Au besoin, l'on pourra notamment se reporter au document FR 2 665 753.

Il est à noter que le vide régnant dans l'enceinte vise à éviter la formation de condensation, notamment sur le capteur 4 et sur la fenêtre 11, ce qui nuirait à la transmission du rayonnement.

En outre, afin de minimiser la présence de molécules gazeuses en suspension dans l'enceinte 7, l'appareil 5 est muni, comme cela est visible sur les 4, 6 et 7, de getters 21 connectés électriquement à la carte de proximité par l'intermédiaire de connecteurs 22 coudés traversant le boîtier 6 au travers de passages 23 étanches également garnis de verre.

Le boîtier 6 et le doigt froid 12 sont tous deux réalisés en titane, par exemple un titane TA40, dit « pur », ou dans un alliage de titane, tel qu'un alliage TAV6, c'est-à-dire un alliage de titane, d'aluminium (dont le pourcentage en masse est compris entre 5,5 et 6,75) et de vanadium (dont le pourcentage en masse est compris entre 3, 5 et 4,5).

On notera que le titane présente une meilleure usinabilité que le Kovar notamment. Il en résulte, par rapport aux appareils de détection infrarouge réalisés dans cette matière, une réduction du nombre de pièces, au bénéfice de la simplicité de la structure et de l'assemblage de l'appareil 5.

Ainsi, dans le mode de réalisation illustré, le boîtier 6 se compose essentiellement de trois pièces structurelles, à savoir :
- un corps principal 24, comportant une section tubulaire 25 entourant le récipient Dewar 14, cette section se prolongeant par une collerette 26 dans laquelle sont percés des trous 27, 28 pour le passage des connecteurs 18 et 22,
- une bride 29 de fixation de l'appareil 5 à un support 30 externe, munie à cet effet d'une collerette 31 percée de trous 32 de fixation et d'une rainure 33 de positionnement apte à coopérer avec un pion (non représenté) prévu en saillie sur le support 30, et
- un capot 34 muni d'une ouverture 35, située au droit du capteur 4, et sur laquelle est montée la fenêtre 11.

La fixation de la bride 29 au corps principal 24 et du capot 34 à la bride 29 est effectuée par emboîtement puis soudure laser au niveau des interfaces. Ce type de soudure, alliée au matériau des pièces 24, 29, 34, assure une parfaite étanchéité de l'enceinte 7 (l'étanchéité étant mesurée à l'hélium, le taux de fuite étant inférieur à 10⁻¹⁰ Atm/cm³/s).

Quant au doigt froid 12, il se compose de deux pièces réalisées dans le même matériau que le boîtier 6, à savoir, d'une part, l'embase 13, qui se présente sous la forme d'un cylindre percé d'un alésage 36 central, soudé au laser, le long d'un bord 37 périphérique supérieur, au corps principal 24 du boîtier 6, et, d'autre part, le récipient Dewar 14, qui est emboîté dans l'alésage 36 de l'embase 13 en étant soudé au laser à celle-ci.

Le queusot 8 est quant à lui réalisé en cuivre ou dans un alliage à base de cuivre. Il traverse le boîtier 6 par le trou 9 ; il est fixé au boîtier 6 par brasure sur un bord externe du trou 9.

Les connecteurs 18, 22, réalisés dans un alliage fer/nickel doré et nickelé, sont fixés au corps principal 24 du boîtier 6 par enverrage, c'est-à-dire par scellement, dans les trous, de manchons de verre 38, 39 enserrant les connecteurs 18, 22 pour former ainsi les passages étanches 19, 23.

La technique du scellement verre/métal ne sera pas abordée dans la présente description. Pour plus de détail, on pourra notamment se reporter à la demande de brevet français FR 2 613 171.

Une alternative à l'enverrage pour le passage étanche des connecteurs 18, 22 est l'utilisation de pastilles de céramique brasées, comme décrit dans la demande de brevet français FR 2 717 981, moyennant l'adaptation de la brasure de céramique sur Kovar à la brasure de céramique sur titane.

Chaque getter 21 comprend un corps 40 cylindrique réalisé dans un alliage absorbant (il s'agit par exemple d'un alliage de fer, de zircone et de vanadium) emmanché sur une broche 41 métallique en molybdène, soudée à une extrémité supérieure 42 au connecteur 22 et fixée, à une extrémité inférieure 43, au boîtier 6 au moyen d'une soudure à l'arc. Chaque getter 21 est activé par circulation dans sa broche 41 d'un courant électrique de faible intensité en provenance de la carte de proximité.

La fenêtre 11 est quant à elle fixée au boîtier 6 (plus précisément sur un bord 44 de l'ouverture 35 pratiquée dans le capot 34) au moyen d'une brasure plomb/indium sous atmosphère d'argon hydrogéné à une température de 250°C environ, après métallisation locale du titane au chrome ou à l'or. Il est à noter que cette technique est particulièrement adaptée lorsque la fenêtre 11 est en germanium, sa fixation au boîtier 6 étant à la fois solide et étanche.

Les matériaux du doigt froid 12 et du boîtier 6 étant identiques, ils présentent des coefficients de dilatation thermique également identiques, de sorte que, d'une part, les variations de température n'entraînent aucune contrainte au niveau des soudures au laser, dont la tenue et l'étanchéité sont ainsi durablement assurée (il est à noter que la durée de vie que l'on doit garantir au missile est de 25 ans, ce qui tient compte de la durée de son stockage) et, d'autre part, le positionnement du doigt froid 12 est à la fois précis et stable.

De plus, il est à noter que le titane présente une excellente résistance à la corrosion, par rapport notamment au Kovar. Cet aspect est important lorsque l'appareil 5 est plongé dans un environnement non étanche.

## Revendications

1. Appareil (5) de détection d'ondes électromagnétiques, qui comprend :
- un boîtier (6) définissant une enceinte (7) à vide, et formé par assemblage de plusieurs pièces, dont trois (24, 29, 34) en titane ou en alliage de titane, deux d'entre elles (29, 34) étant fixées l'une à l'autre par soudure laser, et
- un doigt froid (12), comprenant un récipient Dewar (14) tubulaire, en titane ou alliage de titane, s'étendant dans ladite enceinte (7), en étant fixé de manière étanche audit boîtier (6) au niveau d'une extrémité dudit récipient Dewar (14), dont l'autre extrémité est fermée par une paroi terminale (16) sur laquelle est monté un capteur (4) d'ondes électromagnétiques ;
les deux pièces (29, 34) du boîtier (6) fixées entre elles (29, 34) étant :
- une bride (29) de fixation de l'appareil (5) à un support (30) externe audit boîtier (6) ; et
- un capot (34) muni d'une ouverture (35) située au droit dudit capteur (4), et fermée avec étanchéité par une fenêtre (11) transparente au rayonnement électromagnétique auquel ledit capteur (4) est sensible ;
cet appareil (5) étant **caractérisé en ce que** la troisième desdites trois pièces (24, 29, 34) en titane ou alliage de titane assemblées pour former le boîtier (6) est un corps principal (24) muni de passages (19, 23) étanches pour des connecteurs (18, 22) de liaison dudit capteur (4) à une carte électronique externe audit boîtier (6);
**en ce que** ladite bride (29) est fixée à l'une et à l'autre des deux autres pièces (24, 34) en titane ou alliage de titane dudit boîtier (6) par soudure laser, et ladite paroi terminale (16) du doigt froid (12) est également en titane ou alliage de titane, de sorte que le doigt froid (12) et le boîtier (6) sont tous deux réalisés en titane ou alliage de titane, les matériaux dudit doigt froid (12) et dudit boîtier (6) étant identiques,
et **en ce que** ledit doigt froid (12) comprend de plus une embase (13), également en titane ou alliage de titane, de préférence dans le même matériau que ledit boîtier (6) et/ou ledit récipient Dewar (14), et se présentant sous la forme d'un cylindre percé d'un alésage central (36) et fixé de manière étanche, par soudure laser, d'une part audit corps principal (24) dudit boîtier (6), le long d'un bord périphérique (37) de ladite embase (13) et, d'autre part, audit récipient Dewar (14), qui est emboîté dans ledit alésage (36) de ladite embase (13), de sorte que ledit récipient Dewar (14) s'étend en saillie à partir de ladite embase (13).

2. Appareil (5) selon la revendication 1, **caractérisé en ce que** :
- ledit corps principal (24) comporte une section tubulaire (25) entourant ledit récipient Dewar (14), et une collerette (26) d'une seule pièce avec la section tubulaire (25) et dans laquelle sont percés des trous (27, 28) pour les passages étanches (19, 23) des connecteurs (18, 22); et/ou
- ladite bride (29) de fixation comporte une collerette (31) percée de trous de fixation (32) et d'une rainure (33) de positionnement apte à coopérer avec un pion prévu en saillie sur ledit support (30) externe.

3. Appareil (5) selon l'une des revendications 1 ou 2, **caractérisé en ce que** lesdits passages étanches (19, 23) dans le corps principal (24) sont garnis de verre (38, 39) scellé audit corps principal (24), ou de pastilles de céramique brasées sur ledit corps principal (24), et enserrant lesdits connecteurs (18, 22).

4. Appareil (5) selon l'une quelconque des revendications 1 à 3, **caractérisé en ce que** la fixation de ladite bride (29) audit corps principal (24) et dudit capot (34) à ladite bride (29) est effectuée par emboîtement et soudure laser au niveau des interfaces.

5. Appareil (5) selon l'une quelconque des revendications 1 à 4, **caractérisé en ce que** ladite fenêtre (11) est fixée dans ladite ouverture (35) dudit capot (34) par brasure mettant en oeuvre un alliage plomb/indium.

6. Appareil (5) selon l'une quelconque des revendications 1 à 5, **caractérisé en ce que** ladite fenêtre (11) est réalisée en germanium, saphir ou en silice.

7. Appareil (5) selon l'une quelconque des revendications 1 à 6, **caractérisé en ce que** le boîtier (6) et le doigt froid (12) sont réalisés dans un alliage de titane TA6V.

8. Appareil (5) selon l'une quelconque des revendications 1 à 7, **caractérisé en ce que** le boîtier (6) et le doigt froid (12) sont réalisés dans un titane TA40.

9. Autodirecteur (2) équipé d'un appareil (5) selon l'une des revendications 1 à 8.

10. Projectile (1) autoguidé comprenant un autodirecteur (2) équipé d'un appareil (5) selon l'une des revendications 1 à 8.

## Claims

1. Apparatus (5) for detecting electromagnetic waves, which comprises:
- a casing (6) defining an enclosure (7) under vacuum and formed by assembling several parts, three of which (24, 29, 34) are made from titanium or titanium alloy, two of them (29, 34) being joined to one another by laser welding, and
- a cold finger (12) comprising a tubular Dewar container (14) made from titanium or titanium alloy, extending through said enclosure (7) and being joined to said casing (6) in a sealed manner on a level with one end of said Dewar container (14), the other end of which is closed by a terminal wall (16) on which an electromagnetic wave sensor (4) is mounted;
the two parts (29, 34) of the casing (6) joined to one another (29, 34) being:
- a flange (29) for fixing the apparatus (5) to a support (30) outside of said casing (6); and
- a cover (34) provided with an opening (35) disposed in alignment with said sensor (4) and closed to afford a seal by means of a window (11) that is transparent to the electromagnetic radiation to which said sensor (4) is sensitive;
this apparatus (5) being **characterised in that** the third of said three parts (24, 29, 34) of titanium or titanium alloy assembled to form the casing (6) is a main body (24) provided with sealed passages (19, 23) for connectors (18, 22) connecting said sensor (4) to an electronic circuit board outside of said casing (6);
**in that** said flange (29) is joined to one and the other of the two other parts (24, 34) of titanium or titanium alloy of said casing (6) by laser welding, and said terminal wall (16) of the cold finger (12) is also made from titanium or titanium alloy so that the cold finger (12) and the casing (6) are both made from titanium or titanium alloy, the materials of said cold finger (12) and said casing (6) being identical,
and **in that** said cold finger (12) further comprises a base (13), also of titanium or titanium alloy, preferably of the same material as said casing (6) and/or said Dewar container (14), and being provided in the form of a cylinder with a central bore (36) and joined, by laser welding, in a sealed arrangement to the main body (24) of said casing (6) along a peripheral edge (37) of said base (13) on the one hand and on the other hand to said Dewar container (14), which is nested in said bore (36) of said base (13) so that said Dewar container (14) extends projecting out from said base (13).

2. Apparatus (5) as claimed in claim 1, **characterised in that**:
- said main body (24) has a tubular section (25) surrounding said Dewar container (14) and a collar (26) integral with the tubular section (25) and in which there are orifices (27, 28) to provide sealed passages (19, 23) for the connectors (18, 22); and/or
- said mounting flange (29) has a collar (31) with fixing orifices (32) and a positioning groove (33) designed to co-operate with a pin projecting out from said external support (30).

3. Apparatus (5) as claimed in one of claims 1 or 2, **characterised in that** said sealed passages (19, 23) in the main body (24) are fitted with glass (38, 39) sealed to said main body (24) or with ceramic pads brazed onto said main body (24) and clamping said connectors (18, 22).

4. Apparatus (5) as claimed in any one of claims 1 to 3, **characterised in that** said flange (29) is joined to said main body (24) and said cover (34) is joined to said flange (29) by nesting and laser welding on a level with the interfaces.

5. Apparatus (5) as claimed in any one of claims 1 to 4, **characterised in that** said window (11) is secured in said opening (35) of said cover (34) by brazing using a lead/indium alloy.

6. Apparatus (5) as claimed in any one of claims 1 to 5, **characterised in that** said window (11) is made from germanium, sapphire or silica.

7. Apparatus (5) as claimed in any one of claims 1 to 6, **characterised in that** the casing (6) and the cold finger (12) are made from a TA6V titanium alloy.

8. Apparatus (5) as claimed in any one of claims 1 to 7, **characterised in that** said casing (6) and cold finger (12) are made from a TA40 titanium.

9. Guidance system (2) equipped with an apparatus (5) as claimed in one of claims 1 to 8.

10. Self-guided projectile (1) comprising a guidance system (2) equipped with an apparatus (5) as claimed in one of claims 1 to 8.

## Patentansprüche

1. Gerät (5) zur Detektion von elektromagnetischen Wellen, das umfasst:
- ein Gehäuse (6), das einen Vakuumraum (7) definiert und durch Montage von mehreren Stücken gebildet ist, von denen drei (24, 29, 34) aus Titan oder aus einer Titanlegierung bestehen, wobei zwei von ihnen (29, 34) durch Laserschweißen aneinander befestigt sind, und
- einen kalten Finger (12) mit einem röhrenförmigen Dewar-Gefäß (14) aus Titan oder einer Titanlegierung, das sich in den Raum (7) erstreckt, während er dicht am Gehäuse (6) auf der Höhe eines Endes des Dewar-Gefäßes (14) befestigt ist, dessen anderes Ende durch eine Endwand (16) verschlossen ist, an der ein Sensor (4) für elektromagnetische Wellen angebracht ist;
wobei die zwei Stücke (29, 34) des Gehäuses (6), die aneinander (29, 34) befestigt sind, folgende sind:
- ein Flansch (29) zur Befestigung des Geräts (5) an einem Träger (30) außerhalb des Gehäuses (6); und
- eine Haube (34), die mit einer Öffnung (35) versehen ist, die direkt über dem Sensor (4) liegt und dicht mit einem Fenster (11) verschlossen ist, das für die elektromagnetische Strahlung durchlässig ist, für die der Sensor (4) empfindlich ist;
wobei dieses Gerät (5) **dadurch gekennzeichnet ist, dass** das dritte der drei Stücke (24, 29, 34) aus Titan oder einer Titanlegierung, die zusammengefügt sind, um das Gehäuse (6) zu bilden, ein Hauptkörper (24) ist, der mit dichten Durchgängen (19, 23) für Verbindungselemente (18, 22) zur Verbindung des Sensors (4) mit einer elektronischen Karte außerhalb des Gehäuses (6) ausgestattet ist;
dass der Flansch (29) am einen und anderen der zwei anderen Stücke (24, 34) aus Titan oder einer Titanlegierung des Gehäuses (6) durch Laserschweißen befestigt ist, und die Endwand (16) des kalten Fingers (12) auch aus Titan oder einer Titanlegierung besteht, so dass der kalte Finger (12) und das Gehäuse (6) alle beide aus Titan oder einer Titanlegierung hergestellt sind, wobei die Materialien des kalten Fingers (12) und des Gehäuses (6) identisch sind,
und dass der kalte Finger (12) außerdem einen Sockel (13) umfasst, der auch aus Titan oder einer Titanlegierung, vorzugsweise aus demselben Material wie das Gehäuse (6) und/oder das Dewar-Gefäß (14) besteht, und in Form eines Zylinders vorliegt, der mit einer zentralen Bohrung (36) durchbohrt ist und dicht durch Laserschweißen einerseits am Hauptkörper (24) des Gehäuses (6), entlang eines Umfangsrandes (37) des Sockels (13) und andererseits am Dewar-Gefäß (14), das in die Bohrung (36) des Sockels (13) eingefügt ist, befestigt ist, so dass das Dewar-Gefäß (14) sich vorstehend vom Sockel (13) erstreckt.

2. Gerät (5) nach Anspruch 1, **dadurch gekennzeichnet, dass**:
- der Hauptkörper (24) einen röhrenförmigen Abschnitt (25), der das Dewar-Gefäß (14) umgibt, und einen Kranz (26) aus einem Stück mit dem röhrenförmigen Abschnitt (25) umfasst, in den Löcher (27, 28) für die dichten Durchgänge (19, 23) der Verbindungselemente (18, 22) gebohrt sind; und/oder
- der Befestigungsflansch (29) einen Kranz (31) umfasst, in den Befestigungslöcher (32) und eine Rille (33) zur Positionierung gebohrt sind, die mit einem Stück zusammenwirken kann, das vorstehend am äußeren Träger (30) vorgesehen ist.

3. Gerät (5) nach einem der Ansprüche 1 oder 2, **dadurch gekennzeichnet, dass** die dichten Durchgänge (19, 23) im Hauptkörper (24) mit Glas (38, 39), das auf den Hauptkörper (24) aufgesiegelt ist, oder mit Keramikplättchen, die an den Hauptkörper (24) hartgelötet sind und die Verbindungselemente (18, 22) einspannen, verkleidet sind.

4. Gerät (5) nach einem der Ansprüche 1 bis 3, **dadurch gekennzeichnet, dass** die Befestigung des Flanschs (29) am Hauptkörper (24) und der Haube (34) am Flansch (29) durch Einfügen und Laserschweißen auf der Höhe der Grenzflächen durchgeführt ist.

5. Gerät (5) nach einem der Ansprüche 1 bis 4, **dadurch gekennzeichnet, dass** das Fenster (11) in der Öffnung (35) der Haube (34) durch Hartlöten befestigt ist, das eine Blei/Indium-Legierung einsetzt.

6. Gerät (5) nach einem der Ansprüche 1 bis 5, **dadurch gekennzeichnet, dass** das Fenster (11) aus Germanium, Saphir oder Siliziumdioxid hergestellt ist.

7. Gerät (5) nach einem der Ansprüche 1 bis 6, **dadurch gekennzeichnet, dass** das Gehäuse (6) und der kalte Finger (12) aus einer Titanlegierung TA6V hergestellt sind.

8. Gerät (5) nach einem der Ansprüche 1 bis 7, **dadurch gekennzeichnet, dass** das Gehäuse (6) und der kalte Finger (12) aus Titan TA40 hergestellt sind.

9. Zielsuchkopf (2), der mit einem Gerät (5) nach einem der Ansprüche 1 bis 8 ausgestattet ist.

10. Selbstgesteuertes Projektil (1) mit einem Zielsuchkopf (2), der mit einem Gerät (5) nach einem der Ansprüche 1 bis 8 ausgestattet ist.
